# EUROPEAN PATENT SPECIFICATION

(11) **EP 3 336 056 B1**
(45) Date of publication and mention of the grant of the patent: **11.05.2022**
(21) Application number: 16834956.1
(22) Date of filing: 25.07.2016
(51) Int. Cl.: C25B 1/26, C25B 1/04, C25B 9/00, C25B 9/19, C25B 15/08, C01B 7/01, C01B 7/03, C01B 7/07

(54) **METHOD FOR PRODUCING HYDROGEN CHLORIDE**
VERFAHREN ZUR HERSTELLUNG VON WASSERSTOFFCHLORID
PROCÉDÉ DE PRODUCTION DE CHLORURE D'HYDROGÈNE

(30) Priority: 10.08.2015 JP 2015158341
(43) Date of publication of application: 20.06.2018
(73) Proprietor: Showa Denko K.K., Tokyo 105-8518 (JP)
(72) Inventor: TANIMOTO Yosuke, Tokyo 105-8518 (JP)
(74) Representative: Strehl Schübel-Hopf & Partner
(86) International application number: PCT/JP2016/071744
(87) International publication number: WO 2017/026259

(56) References cited:
- EP-A2- 2 481 837
- WO-A1-2009/073860
- WO-A2-2008/100736
- JP-A- S 589 804
- JP-A- H06 345 410
- JP-A- S63 203 781
- JP-A- 2006 063 410
- JP-A- 2008 307 453
- JP-A- 2013 545 704
- JP-B- S4 715 452
- US-A1- 2010 028 248

## Description

### Technical Field

The present invention relates to a method for producing a hydrogen chloride.

### Background Art

A high purity hydrogen chloride (HCl) which is used as an etching gas, a cleaning gas, or a film forming gas at the time of producing a semiconductor or the like, is produced, in which impurities are removed by liquefying and distilling a hydrogen chloride that is obtained, for example, with a use of a synthetic hydrochloric acid as a raw material. In such a producing method, the impurities are largely removed by the distillation, but a hydrogen bromide (HBr) and a carbon dioxide (CO₂) in the impurities are less likely to be removed by the distillation since boiling points of the hydrogen bromide and the carbon dioxide are close to that of the hydrogen chloride.

PTL 1 discloses a technology of producing a high purity hydrogen chloride by reacting chlorine (Cl₂) and hydrogen (H₂) after respectively purifying the chlorine and the hydrogen in advance. The chlorine is purified by removing the carbon dioxide by distillation. However, in the technology disclosed in PTL 1, there is a need to mount a distillation tower or an adsorption tower in order to purify the chlorine and the hydrogen in advance, thereby, there are problems that a facility for producing the high purity hydrogen chloride becomes complicated, and it is difficult to produce the high purity hydrogen chloride in high efficiency.

PTL 2 describes obtaining gaseous chlorine with low bromine concentration by electrolysing salt water (sodium chloride or the like) with a pH 3 or less.

### Citation List

### Patent Literature

PTL 1: PCT Japanese Translation Patent Publication No. 2013-545704
PTL 2: JP 2006 063410.

### Summary of Invention

### Technical Problem

In order to solve the problems of the related art described above, an object of the present invention is to provide a method for producing a hydrogen chloride that is capable of efficiently producing a hydrogen chloride with a simple facility.

### Solution to Problem

In order to achieve the above object, the invention is set out as in the appended set of claims.

### Advantageous Effects of Invention

According to the present invention, it is possible to efficiently produce the hydrogen chloride with a simple facility.

### Brief Description of Drawings

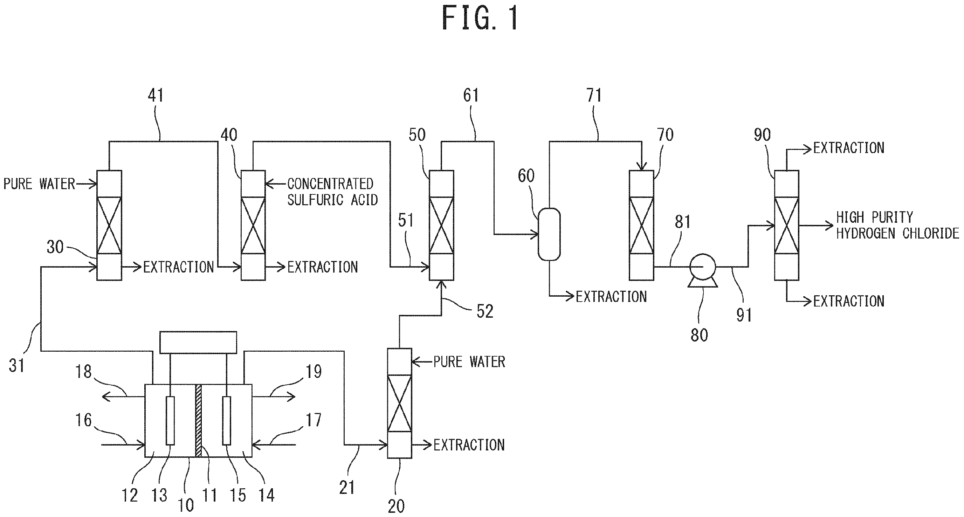

FIG. 1 is a schematic diagram of a facility for producing a hydrogen chloride.

### Description of Embodiments

The inventors of the present invention diligently studied in order to solve the above problems, and resultantly, found out that a pH value of an inorganic chloride aqueous solution at the time of obtaining chlorine and hydrogen by electrolyzing the inorganic chloride aqueous solution, and a temperature and a molar ratio at the time of reacting the chlorine and the hydrogen are adjusted, thereby, it is possible to efficiently produce a hydrogen chloride of which a content of impurities (for example, a hydrogen bromide and a carbon dioxide are less likely to be removed by distillation since boiling points of the hydrogen bromide and the carbon dioxide are close to that of the hydrogen chloride) is low with a simple facility, and the present invention was completed. Hereinafter, an embodiment of the present invention will be described in detail.

A method for producing a hydrogen chloride according to the embodiment includes an electrolysis step of obtaining the chlorine and the hydrogen by electrolyzing an inorganic chloride aqueous solution (for example, sodium chloride aqueous solution) having pH of 3.1 to 4.5, a reaction step of obtaining a crude hydrogen chloride by reacting the chlorine and the hydrogen obtained in the electrolysis step at 1000°C to 1500°C with a use of an excess quantity of the hydrogen with respect to the chlorine in a molar ratio, a dehydration step of dehydrating the crude hydrogen chloride obtained in the reaction step, and a distillation step of compressing and liquefying the dehydrated crude hydrogen chloride obtained in the dehydration step, and purifying the liquid crude hydrogen chloride by distillation.

In the embodiment, the hydrogen bromide and the carbon dioxide are particularly noticed as impurities in the hydrogen chloride, but a mixture thereof is caused by the sodium chloride aqueous solution of a raw material. A certain amount of the hydrogen bromide is included as a sodium bromide in the sodium chloride which is the raw material of the sodium chloride aqueous solution. The carbon dioxide is impurities which are carried in from sodium chloride, and is mixed into the sodium chloride aqueous solution by being added to the sodium chloride aqueous solution, in order to precipitate and remove magnesium ions (Mg²⁺), calcium ions (Ca²⁺), sulfate ions (SO₄²⁻) , or the like in particular. The impurities are mixed as bromine (Br₂) and a carbon dioxide into the chlorine (Cl₂) which is generated from an anode in the electrolysis step.

In the electrolysis step of the method for producing a hydrogen chloride according to the embodiment, the chlorine and the hydrogen are obtained by electrolyzing the sodium chloride aqueous solution having pH of 3.1 to 4.5. If the pH of the sodium chloride aqueous solution is 3.1 to 4.5, the bromine and the carbon dioxide are less likely to be generated at the time of the electrolyzing, thereby, concentrations of the bromine and the carbon dioxide in the produced chlorine becomes low. In a case where the pH of the sodium chloride aqueous solution is less than 3.1 or more than 4.5, the pH of the sodium chloride aqueous solution may be adjusted to 3.1 to 4.5, for example, by adding an acid or a base, and the adjusted sodium chloride aqueous solution may be provided in the electrolyzing.

The reason why it is possible to reduce the concentration of the bromine and the concentration of the carbon dioxide in the chlorine by adjusting the pH, is an equilibrium reaction illustrated in the following formulas. That is, if the pH is increased, the equilibrium of the following two formulas tilts to a right side, and the bromine and the carbon dioxide move in a direction of being respectively ionized.

Chemical Formula (1) Br₂ + H₂O ⇄ HBrO + H⁺ + Br⁻ CO₂ + H₂O ⇄ HCO₃⁻ + H⁺

The bromine has relatively high solubility to the sodium chloride aqueous solution, and is dissolved as a bromine molecule in the sodium chloride aqueous solution. However, if chlorine is generated by the electrolyzing, the bromine is blended in the gaseous chlorine, and is incorporated as bromine in a gas phase. Therefore, since it is possible to keep the bromine in water as a bromide ion (Br⁻) in a case where the pH of the sodium chloride aqueous solution is maintained to be high before the electrolyzing, it is possible to maintain the concentration of the bromine in the chlorine to be low.

On the contrary, the carbon dioxide has low solubility to the sodium chloride aqueous solution, and is not dissolved as a carbon dioxide in the sodium chloride aqueous solution, and is immediately desorbed as a gas from the sodium chloride aqueous solution. Therefore, since the quantity of the desorbed carbon dioxide becomes large before the electrolyzing in a case where the pH thereof is maintained to be low before the electrolyzing, it is possible to maintain the concentration of the carbon dioxide in the chlorine to be low. Bubbling of the sodium chloride aqueous solution before the electrolyzing is performed with an inert gas such as nitrogen, thereby, efficiency in which the carbon dioxide is desorbed from the sodium chloride aqueous solution may be increased.

In this manner, the concentration of the bromine and the concentration of the carbon dioxide in the chlorine tend to conflict with a pH value of the sodium chloride aqueous solution. Therefore, in order to maintain both of the concentration of the bromine and the concentration of the carbon dioxide in the chlorine to be low, there is a need to manage the pH value of the sodium chloride aqueous solution to be 3.1 to 4.5, and to be preferably 3.4 to 4.0.

A kind of the inorganic chloride being a solute of the inorganic chloride aqueous solution is not limited to sodium chloride, but any other kinds of inorganic chloride may be used as long as it is possible to obtain the chlorine and the hydrogen by electrolyzing the aqueous solution. For example, it is possible to use a metal chloride such as a lithium chloride, a potassium chloride, a rubidium chloride, a beryllium chloride, a magnesium chloride, a calcium chloride, a strontium chloride, or a barium chloride. Moreover, it is possible to use an ammonium chloride, a quaternary ammonium hydrochloride, an amine hydrochloride, or the like.

In the reaction step of the method for producing a hydrogen chloride according to the embodiment, the crude hydrogen chloride is obtained, by reacting chlorine and hydrogen obtained in the electrolysis step at 1000°C to 1500°C with a use of the excess quantity of hydrogen with respect to chlorine in a molar ratio. A reaction temperature is preferably 1200°C to 1300°C. The molar ratio of chlorine and hydrogen (chlorine : hydrogen) is preferably 1 : 1.25 to 1 : 1.6, is more preferably 1 : 1.25 to 1 : 1.5, and is further preferably 1 : 1.3 to 1 : 1.4.

If the reaction temperature is 1000°C or higher, the equilibrium of the following formula tilts to the right side, thereby, the concentration of the carbon dioxide in the produced hydrogen chloride becomes low. On the other hand, if the reaction temperature is 1500°C or lower, a loss of heat quantity becomes small, and a cost is reduced.

Chemical Formula (2) CO₂ + H₂ ⇄ CO + H₂O

If the molar ratio of hydrogen with respect to chlorine is 1.25 or more, the equilibrium of the above formula tilts to the right side, thereby, the concentration of the carbon dioxide in the produced hydrogen chloride becomes low. On the other hand, if the molar ratio of hydrogen with respect to chlorine is 1.6 or less, the loss of hydrogen of the excess quantity becomes small, and the cost is reduced.

It is possible to carry out the reaction step in the method for producing a hydrogen chloride according to the embodiment at an atmospheric pressure, but the pressure is not particularly limited. It is possible to carry out the reacting at the pressure which is -0.05 MPaG to 0.15 MPaG.

Next, in the dehydration step of the method for producing a hydrogen chloride according to the embodiment, the crude hydrogen chloride obtained in the reaction step is dehydrated, but the dehydrating method is not particularly limited. For example, a method in which moisture is removed from the crude hydrogen chloride due to an adsorption action of a carrier, by the carrier to be in contact with the crude hydrogen chloride in an absorber which is packed with the carrier such as activated alumina or zeolite, or a method in which the moisture is condensed by cooling the crude hydrogen chloride may be used. Alternatively, the method of using the carrier and the method of condensing the moisture may be used in combination.

As described above, the dehydration step of the method for producing a hydrogen chloride according to the embodiment may be a step of dehydrating the crude hydrogen chloride obtained in the reaction step as it is, but the dehydration step is not limited thereto, and may be a step of absorbing the crude hydrogen chloride obtained in the reaction step once in the water to make a hydrochloric acid, and dehydrating the hydrogen chloride diffused from the hydrochloric acid. Thereby, since it is possible to remove the hydrogen bromide from the crude hydrogen chloride by absorbing the crude hydrogen chloride in the water, in the distillation step described later, it is possible to reduce a burden on a distillation tower relating to the removal of the hydrogen bromide.

A method for absorbing the crude hydrogen chloride in the water is not particularly limited. For example, it is possible to set the temperature to be 20°C to 80°C at the time of absorbing the hydrogen chloride, and it is possible to set the pressure at that time to be the pressure in the vicinity of the atmospheric pressure. An apparatus which is used at the time of absorbing the hydrogen chloride is not particularly limited, and it is possible to use a general absorption tower. A multistage absorption tower that includes an absorption unit of a tray tower form such as a packed tower or a cap tray, and circulates a liquid phase through a cooler, or an absorption tower of a wet wall form may be used.

It is preferable that the concentration of the hydrogen chloride in hydrochloric acid obtained by the step of absorbing the crude hydrogen chloride in the water is as high as possible. However, considering absorption efficiency and the like, the concentration thereof is preferably 20 mass% to 40 mass%.

For example, the obtained hydrochloric acid is sent to a diffusion tower, and the hydrogen chloride is recollected (referred to as a "diffusion step", hereinafter) in a gas state from a head of the diffusion tower. A form of the diffusion tower is not particularly limited, but for example, it is possible to use the diffusion tower such as a packed tower form having a reboiler at a bottom portion or a tray form. A diffusion condition of the hydrogen chloride in the diffusion step is not particularly limited, but for example, it is possible to set the temperature to be 90°C to 150°C, and it is possible to set the pressure to be 50 kPaG to 500 kPaG. It is possible to perform the diffusing while supplying a carrier gas to the diffusion tower.

Next, in the distillation step of the method for producing a hydrogen chloride according to the embodiment, the hydrogen chloride is obtained by compressing and liquefying the dehydrated crude hydrogen chloride obtained in the dehydration step, and purifying the liquid crude hydrogen chloride by distillation. A distillation apparatus which is capable of being used in the distillation step may be any as long as the apparatus has a function which is necessary for the normal distillation, but it is preferable to use a rectification apparatus such as the tray tower or the packed tower. However, the packed tower is more preferable since a structure thereof is simple. As a packing material with which the packed tower is packed, for example, it is possible to use the existing material such as Raschig ring, Poll ring, or Tellerette (registered trademark). It is possible to perform the distillation in a continuous manner (continuous distillation) or in batch manner (batch distillation).

An operating condition of the distillation may include various aspects depending on a utility, the needed quality of the hydrogen chloride, or the like, and is not particularly limited. However, considering that a head temperature of the distillation tower does not become too low, it is possible to set an operating pressure to be 0.1 MPa to 10 MPa, and the operating pressure is preferably 0.5 MPa to 5 MPa. In case of such an operating condition, the head temperature is within a range of approximately -80°C to 60°C.

By such a method for producing a hydrogen chloride according to the embodiment, it is possible to efficiently produce a high purity hydrogen chloride of which a purity is 99.999 mass% or more with the simple facility. It is possible to use the produced high purity hydrogen chloride as an etching gas or a cleaning gas at the time of producing a semiconductor or a thin film transistor. Particularly, in an epitaxial growth process of Si-Ge (semiconductor), GaN (light-emitting diode or the like), and SiC (power semiconductor), the produced high purity hydrogen chloride is used not only as a cleaning gas but also as a film forming gas. However, since the impurities remain in the film if the impurities are present in the film forming gas, the high purity hydrogen chloride obtained by the method for producing a hydrogen chloride according to the embodiment is very useful. It is possible to use the high purity hydrogen chloride in the producing of various chemical agents such as a medicine and a dye intermediate.

### Examples

Hereinafter, the present invention will be described in more detail with reference to Examples.

### Example 1

A sodium chloride aqueous solution of which a concentration was 30 g/L was adjusted to have pH = 3.5, by a sodium hydroxide aqueous solution of which the concentration was 48 mass%, and a hydrochloric acid of which the concentration was 35 mass%. Therefore, the sodium chloride aqueous solution was electrolyzed by using an electrolytic bath having a cation-exchanged film. A method of the electrolyzing will be described with reference to FIG. 1.

An electrolytic bath 10 has two chambers which are divided by a cation-exchanged film 11 (for example, Nafion film (registered trademark) manufactured by DuPont Company) , and an anode 13 is disposed in one chamber (anode chamber 12), and a cathode 15 is disposed in the other chamber (cathode chamber 14). The sodium chloride aqueous solution is supplied to the anode chamber 12 through a sodium chloride aqueous solution supply pipe 16, and pure water is supplied to the cathode chamber 14 through a water supply pipe 17. The electrolyzing of the sodium chloride aqueous solution is performed by applying a direct current between both electrodes 13 and 15, and chlorine (Cl₂) from the anode 13 and hydrogen (H₂) from the cathode 15 are respectively generated. A voltage of the direct current which was applied between both electrodes 13 and 15 is 3.1 V, and a current density is 3 kA/m³.

If the electrolyzing proceeds, the sodium chloride aqueous solution within the anode chamber 12 becomes a low concentration sodium chloride aqueous solution by lowering the concentration of the sodium chloride, and the pure water within the cathode chamber 14 becomes the sodium hydroxide aqueous solution. Therefore, the low concentration sodium chloride aqueous solution and the sodium hydroxide aqueous solution are sequentially discharged from the electrolytic bath 10, and the electrolyzing is performed while the sodium chloride aqueous solution of which the concentration is 30 g/L and the pure water are supplied to the electrolytic bath 10.

That is, the low concentration sodium chloride aqueous solution within the anode chamber 12 was sequentially discharged through a sodium chloride aqueous solution discharge pipe 18 in the middle of the electrolyzing, and was replaced with the sodium chloride aqueous solution which was supplied through the sodium chloride aqueous solution supply pipe 16. The sodium hydroxide aqueous solution within the cathode chamber 14 was sequentially discharged through a sodium hydroxide aqueous solution discharge pipe 19 in the middle of the electrolyzing, and was replaced with the pure water which was supplied through the water supply pipe 17. The concentration of the bromine (Br₂) in the chlorine generated by the electrolyzing which was performed in this manner was 25 ppm by volume, and the concentration of the carbon dioxide was 9000 ppm by volume.

The hydrogen generated by the electrolyzing was sent to a hydrogen washing tower 20 through a hydrogen plumbing 21, and the chlorine was sent to a chlorine washing tower 30 through a chlorine plumbing 31. In the hydrogen washing tower 20, the hydrogen was washed by being in contact with a counter-current flow of the pure water. In the chlorine washing tower 30, the chlorine was washed by being in contact with the counter-current flow of the pure water. The washed chlorine was sent to a dehydration tower 40 from the chlorine washing tower 30 through a chlorine plumbing 41, and was dehydrated by being in contact with the counter-current flow of a sulfuric acid.

The dehydrated chlorine is sent to a synthetization tower 50 from the dehydration tower 40 through a chlorine plumbing 51, the washed hydrogen was sent to the synthetization tower 50 from the hydrogen washing tower 20 through a hydrogen plumbing 52, and the chlorine and the hydrogen were reacted, thereby, the crude hydrogen chloride was obtained. In the synthetization tower 50, a flow rate of the hydrogen was 240 m³/h, and the flow rate of the chlorine was 160 m³/h (the molar ratio of the chlorine and the hydrogen was 1 : 1.5), and the hydrogen and the chlorine were reacted under the conditions of the atmospheric pressure and the temperature of 1200°C. The composition of the obtained crude hydrogen chloride was such that the hydrogen chloride was 80 volume%, the hydrogen was 20 volume%, the hydrogen bromide was 20 ppm by volume, the carbon dioxide was 70 ppm by volume, a carbon monoxide was 3500 ppm by volume, and the water was 1000 ppm by volume.

The obtained crude hydrogen chloride was sent to a condenser 60 from the synthetization tower 50 through a hydrogen chloride plumbing 61, and was cooled at -10°C, thereby, the moisture in the crude hydrogen chloride was condensed, and a portion of the moisture of the crude hydrogen chloride was removed.

Furthermore, the crude hydrogen chloride is sent to a moisture adsorption tower 70 from the condenser 60 through a hydrogen chloride plumbing 71, and was dehydrated by being circulated in an adsorbing agent (for example, Molecular sieve 3A manufactured by Union Showa K. K.) which is packed in the moisture adsorption tower 70. In a circulating velocity of the crude hydrogen chloride, a linear velocity LV (linear velocity) is 10 m/min, and a space velocity SV (space velocity) is 1000/h. A moisture concentration of the crude hydrogen chloride at an outlet of the moisture adsorption tower 70 was 0.5 ppm by volume.

The dehydrated crude hydrogen chloride was sent to a compressor 80 from the moisture adsorption tower 70 through a hydrogen chloride plumbing 81, and was condensed (liquefied) by being compressed with the compressor 80. The liquefied crude hydrogen chloride was sent to a distillation tower 90 from the compressor 80 through a hydrogen chloride plumbing 91, and a component of a low boiling point and a component of a high boiling point were respectively removed by the distillation, thereby, the high purity hydrogen chloride was obtained. The high purity hydrogen chloride was extracted from a middle stage of the distillation tower 90, and the composition thereof was measured. As a result, the purity was 99.999 mass% or more. Regarding the concentration of the impurities, the hydrogen bromide was 0.2 ppm by volume, and the carbon dioxide was 0.4 ppm by volume,

### Example 2

The high purity hydrogen chloride was produced in the same manner as Example 1, except that the crude hydrogen chloride obtained in the synthetization tower 50 was not immediately sent to the condenser 60, and the following step was performed between the synthetization tower 50 and the condenser 60.

The crude hydrogen chloride obtained in the synthetization tower 50 was supplied to an absorption tower which was not illustrated in the drawing, the crude hydrogen chloride was absorbed in the pure water by spraying the pure water within the absorption tower, and the hydrochloric acid of which the concentration was 35 mass% was obtained. The hydrochloric acid was sent to a diffusion tower which was not illustrated in the drawing, and the hydrogen chloride was diffused from the hydrochloric acid. In a diffusion condition, the temperature at the bottom of the tower was 110°C, and the pressure was the atmospheric pressure. As a diffusion tower, the diffusion tower having a packed bed which was packed with the packing material was used. In the composition of the hydrogen chloride obtained from the head of the diffusion tower, the hydrogen chloride was 96 volume%, the hydrogen bromide was 1 ppm by volume, the carbon dioxide was 10 ppm by volume, and the water was 4 volume%.

The subsequent steps thereof were performed in the same manner as Example 1, and the high purity hydrogen chloride was obtained. The high purity hydrogen chloride was extracted from the middle stage of the distillation tower 90, and the composition thereof was measured. As a result, the purity was 99.999 mass% or more. In the concentration of the impurities, the hydrogen bromide was 0.1 ppm by volume, and the carbon dioxide was 0.4 ppm by volume.

### Example 3

The high purity hydrogen chloride was obtained in the same manner as Example 1, except that the flow rate of the hydrogen was 180 m³/h, and the flow rate of the chlorine was 160 m³/h (the molar ratio of the chlorine and the hydrogen was 1 : 1.13) in the synthetization tower 50. In the composition of the crude hydrogen chloride obtained in the synthetization tower 50, the hydrogen chloride was 80 volume%, the hydrogen was 6 volume%, the hydrogen bromide was 25 ppm by volume, the carbon dioxide was 1000 ppm by volume, the carbon monoxide was 3500 ppm by volume, and the water was 600 ppm by volume. The purity of the high purity hydrogen chloride which was extracted from the middle stage of the distillation tower 90, was 99.999 mass% or more. In the concentration of the impurities, the hydrogen bromide was 0.2 ppm by volume, and the carbon dioxide was 4 ppm by volume.

### Example 4

The high purity hydrogen chloride was obtained in the same manner as Example 1, except that the flow rate of the hydrogen was 200 m³/h, and the flow rate of the chlorine was 160 m³/h (the molar ratio of the chlorine and the hydrogen was 1 : 1.25) in the synthetization tower 50. In the composition of the crude hydrogen chloride obtained in the synthetization tower 50, the hydrogen chloride was 80 volume%, the hydrogen was 11 volume%, the hydrogen bromide was 25 ppm by volume, the carbon dioxide was 500 ppm by volume, the carbon monoxide was 3500 ppm by volume, and the water was 600 ppm by volume. The purity of the high purity hydrogen chloride which was extracted from the middle stage of the distillation tower 90, was 99.999 mass% or more. In the concentration of the impurities, the hydrogen bromide was 0.2 ppm by volume, and the carbon dioxide was 2 ppm by volume.

### Comparative Example 1

The hydrogen chloride was obtained in the same manner as Example 1, except that the pH of the sodium chloride aqueous solution which was provided in the electrolyzing was set to be 2. The concentration of the bromine was 80 ppm by volume, and the concentration of the carbon dioxide was 6000 ppm by volume in the chlorine generated by the electrolyzing. In the composition of the crude hydrogen chloride obtained in the synthetization tower 50, the hydrogen chloride was 80 volume%, the hydrogen was 20 volume%, the hydrogen bromide was 70 ppm by volume, the carbon dioxide was 50 ppm by volume, the carbon monoxide was 2400 ppm by volume, and the water was 1000 ppm by volume. The purity of the hydrogen chloride which was extracted from the middle stage of the distillation tower 90, was 99.999 mass% or more. In the concentration of the impurities, the hydrogen bromide was 1.0 ppm by volume, and the carbon dioxide was 0.4 ppm by volume.

### Comparative Example 2

The hydrogen chloride was obtained in the same manner as Example 1, except that the flow rate of the hydrogen was 160 m³/h, and the flow rate of the chlorine was 160 m³/h (the molar ratio of the chlorine and the hydrogen was 1 : 1) in the synthetization tower 50. In the composition of the crude hydrogen chloride obtained in the synthetization tower 50, the hydrogen chloride was 80 volume%, the hydrogen was 100 ppm by volume, the hydrogen bromide was 25 ppm by volume, the carbon dioxide was 4500 ppm by volume, the carbon monoxide was 10 ppm by volume, and the water was 600 ppm by volume. The purity of the hydrogen chloride which was extracted from the middle stage of the distillation tower 90, was 99.997 mass%. In the concentration of the impurities, the hydrogen bromide was 0.2 ppm by volume, and the carbon dioxide was 18 ppm by volume.

### Reference Signs List

- 10: electrolytic bath
- 50: synthetization tower
- 60: condenser
- 70: moisture adsorption tower
- 80: compressor
- 90: distillation tower

## Claims

1. A method for producing a hydrogen chloride comprising:
obtaining chlorine and hydrogen by electrolyzing an inorganic chloride aqueous solution having pH of 3.1 to 4.5;
obtaining a crude hydrogen chloride by reacting the chlorine and the hydrogen obtained in the electrolyzing at 1000°C to 1500°C with a use of an excess quantity of the hydrogen with respect to the chlorine in a molar ratio;
dehydrating the crude hydrogen chloride obtained in the reacting; and
compressing and liquefying the dehydrated crude hydrogen chloride obtained in the dehydrating, and purifying the liquid crude hydrogen chloride by distillation;
wherein the molar ratio of the chlorine and the hydrogen reacted in the reacting is 1 : 1.25 to 1 : 1.6.

2. The method for producing a hydrogen chloride according to claim 1, wherein the dehydrating comprises absorbing the crude hydrogen chloride obtained in the reacting in water to make a hydrochloric acid, and dehydrating a hydrogen chloride diffused from the hydrochloric acid.

## Patentansprüche

1. Verfahren zur Herstellung eines Chlorwasserstoffs, umfassend:
das Gewinnen von Chlor und Wasserstoff durch Elektrolyse einer wässrigen anorganischen Chloridlösung mit einem pH-Wert von 3,1 bis 4,5;
das Gewinnen eines rohen Chlorwasserstoffs durch Reaktion des Chlors und des bei der Elektrolyse erhaltenen Wasserstoffs bei 1000 °C bis 1500 °C unter Verwendung einer im molaren Verhältnis zum Chlor überschüssigen Menge Wasserstoff;
das Entwässern des bei der Reaktion erhaltenen rohen Chlorwasserstoffs; und
Komprimieren und Verflüssigen des bei dem Entwässern erhaltenen entwässerten Rohchlorwasserstoffs und Reinigen des flüssigen Rohchlorwasserstoffs durch Destillation;
wobei das molare Verhältnis des Chlors und des umgesetzten Wasserstoffs in der Reaktion 1 : 1,25 bis 1 : 1,6 beträgt.

2. Verfahren zur Herstellung eines Chlorwasserstoffs nach Anspruch 1, wobei das Entwässern das Absorbieren des rohen Chlorwasserstoffs, der bei der Reaktion in Wasser zur Herstellung einer Salzsäure erhalten wird, und das Entwässern eines aus der Salzsäure diffundierten Chlorwasserstoffs umfasst.

## Revendications

1. Procédé de production d'un chlorure d'hydrogène comprenant :
l'obtention de chlore et d'hydrogène par électrolyse d'une solution aqueuse de chlorure inorganique ayant un pH de 3,1 à 4,5;
l'obtention d'un chlorure d'hydrogène brut par réaction du chlore et de l'hydrogène obtenus dans l'électrolyse entre 1 000 °C et 1 500 °C à l'aide d'une quantité excessive de l'hydrogène par rapport au chlore en termes de rapport molaire ;
la déshydratation du chlorure d'hydrogène brut obtenu dans la réaction ; et
la compression et la liquéfaction du chlorure d'hydrogène brut déshydraté obtenu dans la déshydratation, et la purification du chlorure d'hydrogène brut liquide par distillation ;
dans lequel le rapport molaire du chlore et de l'hydrogène ayant réagi dans la réaction est de 1:1,25 à 1:1,6.

2. Procédé de production d'un chlorure d'hydrogène selon la revendication 1, dans lequel la déshydratation comprend l'absorption du chlorure d'hydrogène brut obtenu dans la réaction dans de l'eau pour préparer un acide chlorhydrique, et la déshydratation d'un chlorure d'hydrogène diffusé à partir de l'acide chlorhydrique.
